# EUROPÄISCHE PATENTANMELDUNG

(11) **EP 0 897 897 A1**
(43) Veröffentlichungstag der Anmeldung: **24.02.1999**
(21) Anmeldenummer: 97114218.7
(22) Anmeldetag: 18.08.1997
(51) Int. Cl.: C03C 8/24, C04B 37/00, C04B 37/02, H01M 2/08, H01M 8/02

(54) **Composit-Glaslot, Verwendung eines Composit-Glaslotes und Hochtemperatur-Brennstoffzelle**

(71) Anmelder: SIEMENS AKTIENGESELLSCHAFT, 80333 München (DE)
(72) Erfinder: Jansing, Thomas, 90425 Nürnberg (DE); Eichler, Klaus, 01187 Dresden (DE); Otschik, Peter, 01728 Possendorf (DE); Schaffrath, Winfried, 01307 Dresden (DE); Solow, Gerhard, 14532 Klein-Machnow (DE)

(57) **Zusammenfassung**

Das vorliegende Composit-Glaslot (8) besteht aus 70 bis 95 Gew.-% einer Glas-Komponente (10), die 35 bis 60 Gew.-%, SiO₂, 8 bis 15 Gew.-% Al₂O₃, 15 bis 30 Gew.-% BaO, 10 bis 20 Gew.-% B₂O₃ und bis zu 15 Gew.-% MgO enthält, und aus 5 bis 30 Gew.-% einer ein Metalloxid enthaltenden weiteren Komponente (12) zum Fügen von metallischen und/oder keramischen Bauelementen (2,4), wobei die weitere Komponente (12) Körner mit einer Korngröße bis zu 10 µm aufweist. Durch diese Maßnahme weist die Fuge (6) eine nur kleine Dicke auf.

## Beschreibung

Die Erfindung bezieht sich auf ein Composit-Glaslot, auf eine Verwendung eines Composit-Glaslotes und auf eine Hochtemperatur-Brennstoffzelle.

Als Glaslote (auch Lötgläser genannt) werden leicht schmelzende Gläser mit niedriger Viskosität und kleiner Oberflächenspannung bei Verschmelzungstemperaturen zwischen 400 und 700 °C bezeichnet. Es wird zwischen thermisch entglasbaren (kristallisierenden) und relativ entglasungsfesten Glasloten unterschieden. Glaslote dienen dazu, spezielle Teile (Komponenten) mit anderen Gläsern, mit Metallen oder keramischen Werkstoffen zu fügen, ohne daß die speziellen Teile sich verformen. Unter Fügen versteht man das passende Aneinandersetzen oder Verbinden von Werkstücken oder Werkstoffen durch verschiedene Verfahren (beispielsweise durch Schrauben, Nieten, Schweißen, Walzen, usw.). Dementsprechend wird als Fuge die Trennungsöffnung zwischen zwei zu verbindenden Werkstücken bezeichnet. Glaslote werden beispielsweise beim Fügen von Komponenten einer Hochtemperatur-Brennstoffzelle eingesetzt.

Aus der Deutschen Patentschrift 43 34 438 ist ein Composit-Glaslot mit einer Glaskomponente und einer Composit-Komponente bekannt, wobei bei einer Löttemperatur die Glas-Komponente flüssig und die Composit-Komponente fest ist. Die Glas-Komponente macht einen Anteil von 40 bis 95 Gew.-% aus und besteht aus 10 bis 50 Gew.-% SiO₂, 10 bis 40 Gew.-% Al₂O₃, 0 bis 30 Gew.-% B₂O₃ sowie 20 bis 50 Gew.-% CaO und 0 bis 50 Gew.-% MgO. Die Composit-Komponente macht einen Anteil von 5 bis 60 Gew.-% am Composit-Glaslot aus und besteht aus einem Metalloxid, vorzugsweise Zirkonoxid, Magnesiumoxid und/oder Aluminiumoxid.

Das Composit-Glaslot ist vorzugsweise für Fugen mit einer Dicke zwischen 300 und 1000 µm geeignet (d.h. daß die zu fügenden Komponenten einen Abstand zueinander zwischen 300 und 1000 µm haben). Die Körner der Composit-Komponente weisen eine Korngröße von 10 bis 500 µm, insbesondere etwa 100 µm, auf. Es entsteht eine Verbindung zwischen der Glas-Komponente und der Composit-Komponente, welche bei der Löttemperatur (d.h. der Fügetemperatur) von einem viskosen Zustand in einen weitgehend festen und mechanisch stabilen Zustand übergeht. Die Körner der Composit-Komponente haben somit die Funktion eines Keimbildners für die bei der Löttemperatur zunächst flüssig vorliegende Glas-Komponente. Am Ende des Fügevorganges liegt somit ein weitgehend entglastes Composit-Glaslot vor.

Für Fugen mit einer kleineren Dicke von beispielsweise unter 200 µm, insbesondere etwa 50 µm, ist dieses Glaslot nicht geeignet. Bei diesen Dicken werden andere Anforderungen an die Viskosität (unter "Viskosität" versteht man die Eigenschaft einer Flüssigkeit, der gegenseitigen laminaren Verschiebung zweier benachbarter Schichten einen Widerstand entgegenzusetzen) und an den thermischen Ausdehnungskoeffizienten (der im wesentlichen vom Kristallisationsgrad abhängt) gestellt. Bei Fugen mit einer kleinen Dicke steht im Verhältnis zu dicken Fugen (mit einer Dicke von über 200 µm, wie aus dem Stand der Technik bekannt) weniger Werkstoff zur Verfügung, um beispielsweise Längen- und Volumenausdehnungen der zu fügenden Komponenten bei ihrem Einsatz bei erhöhter Temperatur auszugleichen.

Ein Werkstoff für dicke Fugen, der weitgehend auskristallisiert ist, eignet sich somit nicht für dünne Fugen.

Der Erfindung liegt nun die Aufgabe zugrunde, ein Composit-Glaslot zum Fügen von metallischen und/oder keramischen Bauelementen anzugeben, wobei die Fugen eine nur kleine Dicke besitzen.

Gemäß der Erfindung enthält ein Composit-Glaslot 70 bis 95 Gew.-% einer Glas-Komponente und 5 bis 30 -Gew.% einer ein Metalloxid enthaltenden weiteren Komponente zum Fügen von metallischen und/oder keramischen Bauelementen. Die Glas-Komponente enthält 35 bis 60 Gew.-% SiO₂, 8 bis 15 Gew.-% Al₂O₃, 15 bis 30 -Gew.% BaO, 10 bis 20 Gew.-% B₂O₃ und bis zu 15 Gew.-% MgO. Die weitere Komponente weist Körner mit einer Korngröße bis zu 10 µm auf.

Das Composit-Glaslot ist besonders zum Fügen von Bauelementen mit einem Abstand von höchstens 200 µm, insbesondere um 50 µm, geeignet, d.h. die Fugen besitzen in etwa eine Dicke von 50 µm. Im Gegensatz zum Stand der Technik beträgt der maximale Anteil der weiteren Komponente am Composit-Glaslot (d.h. der Komponente die ein Metalloxid enthält) halb so viele Gewichtsprozente. Zudem ist die Korngröße der Körner der weiteren Komponente kleiner als 10 µm. Durch den kleineren Anteil der weiteren Komponente (die unter anderem für die Kristallbildung in der Glas-Komponente zuständig ist) und durch die kleine Korngröße wird eine ausreichende kleine Viskosität im Composit-Glaslot erreicht, die notwendig ist, um Längen- und Volumenänderungen der zusammenzufügenden Komponenten bei deren Betrieb bei erhöhter Temperatur auszugleichen. Dennoch ist eine ausreichende Kristallbildung (die weitere Komponente wird auch als kristalliner Füllstoff bezeichnet) für einen ausreichenden linearen thermischen Ausdehnungskoeffizienten gewährleistet.

Neben den beiden Komponenten (der Glas-Komponente und der weiteren Komponente) des Composit-Glaslotes können auch noch andere Füllstoffe im Composit-Glaslot enthalten sein. In der Regel aber besteht das Composit-Glaslot aus der Glas-Komponente und der weiteren Komponente. Vorzugsweise weisen die Körner der weiteren Komponente eine Korngröße unter 5 µm auf.

Insbesondere kann die weitere Komponente Magnesiumoxid (MgO) als Metalloxid enthalten. Außerdem können auch Zirkonoxid und/oder Aluminiumoxid als Metalloxid enthalten sein.

In einer weiteren Ausgestaltung beträgt die Löttemperatur zwischen 600 und 1100 °C. Die bei diesen Löttemperaturen hergestellten Fügeverbindungen (Fugen) sind thermisch weitgehend stabil. Außerdem wird eine Verdampfung von flüchtigen Verbindungen aus den zu fügenden metallischen und/oder keramischen Bauelementen, wodurch die Eigenschaften (beispielsweise bezüglich der elektrischen Leitfähigkeit) der Bauelemente in unerwünschter Weise verändert werden können, vermieden.

Gemäß der Erfindung wird das Glaslot zum Fügen zweier Bauelemente verwendet, wobei beide Bauelemente aus Metall oder Keramik sind oder ein Bauelement aus Metall und das andere Bauelement aus Keramik ist. Das Glaslot ist somit universell einsetzbar. Es kann somit überall eingesetzt werden, wo Bauelemente miteinander gefügt werden sollen, die aus Metall oder Keramik sind.

Gemäß der Erfindung können diese Bauelemente auch die Bauelemente einer Hochtemperatur-Brennstoffzelle sein. Das Composit-Glaslot ist hochtemperaturbeständig, gasundurchlässig, korrosionsbeständig und auch bei hohen Temperaturen weitgehend elektrisch isolierend. Beispielsweise können mit diesem Glaslot die gasführenden Zuleitungen für die Hochtemperatur-Brennstoffzellen (die Wasserstoff (H₂)oder Sauerstoff (O₂) führen) voneinander getrennt werden. Es kann somit überall dort in der Hochtemperatur-Brennstoffzelle eingesetzt werden, wo dünne Fugen benötigt werden und außerdem kein elektrischer Kontakt notwendig ist.

Insbesondere können die beiden Bauelemente nur an Teilbereichen ihrer Oberfläche zusammengefügt werden und das Glaslot mittels Siebdrucktechnik nur an diesen Teilbereichen aufgebracht werden. Bei der Siebdrucktechnik wird als Druckform ein feinmaschiges Sieb verwendet, das an bildfreien Stellen (da wo kein Composit-Glaslot aufgetragen werden soll) undurchlässig abgedeckt ist (Schablone).

Weitere vorteilhafte Ausgestaltungen sind in den Unteransprüchen wiedergegeben.

Zum besseren Verständnis der Erfindung und ihrer Weiterbildung werden mehrere Ausführungsbeispiele anhand einer Figur erläutert. Die Figur zeigt zwei durch ein Composit-Glaslot gefügte Bauelemente in schematischer Darstellung.

In der Figur erkennt man zwei metallische Bauelemente 2,4, beispielsweise aus chromhaltigen Werkstoff, die durch eine Fuge 6 (die als Lötnaht ausgeführt ist) miteinander verbunden (gefügt) sind. Die Bauelemente 2,4 können aber auch aus Keramik oder beispielsweise das Bauelement 2 aus Metall und das Bauelement 4 aus Keramik sein.

Die Fuge 6, die angenähert 50 µm dick ist, ist mit einem Composit-Glaslot 8 (Glaslot 8) aufgefüllt. Die Dicke der Fuge 6 kann aber auch bis zu 200 µm betragen.

Das Composit-Glaslot 8 enthält in diesem Ausführungsbeispiel 90 Gew.-% einer Glas-Komponente 10 und 10 Gew.-% einer weiteren ein Metalloxid enthaltenden Komponente 12. Die Glas-Komponente 10 besteht aus 50 Gew.-% SiO₂, 10 Gew.-% Al₂O₃, 20 Gew.-% BaO, 10 Gew.-% B₂O₃ und 10 Gew.-% MgO. Die weitere Komponente 12 enthält Magnesiumoxid (MgO) als Metalloxid.

In weiteren Ausführungsbeispielen kann das Glaslot 8 70 bis 95 Gew.-% der Glas-Komponente 10 und 5 bis 30 Gew.-% der weiteren Komponente enthalten. Die Glas-Komponente 10 kann dann 35 bis 60 Gew.-% SiO₂, 8 bis 15 Gew.-% Al₂O₃, 15 bis 30 Gew.-% BaO, 10 bis 20 Gew.-% B₂O₃ und bis zu 15 Gew.-% MgO enthalten. Die weitere Komponente 12 kann auch Zirkonoxid und/oder Aluminiumoxid als Metalloxid enthalten.

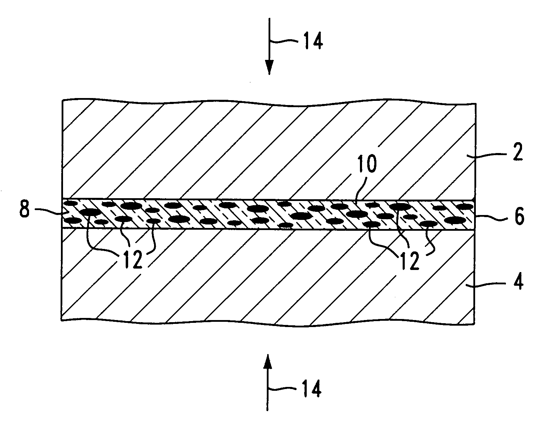

In dem in Figur 1 dargestellten Ausführungsbeispiel weist das Magnesiumoxid (MgO) der weiteren Komponente Körner mit einer Korngröße unter 5 µm auf. In nicht weiter dargestellten Ausführungsbeispielen kann die Korngröße auch bis zu 10 µm aufweisen. Die Glas-Komponente 10 weist ebenfalls Körner mit einer Korngröße unter 5 µm auf. Die Korngröße kann aber auch bis zu 10 µm betragen.

Das Glaslot 8 wird bei einer Löttemperatur zwischen 1000 und 1100 °C für eine Zeitdauer von ungefähr 1 Stunde gelötet. Die Löttemperatur kann auch niedriger gewählt werden, sollte aber wenigstens 600 °C betragen. Bei der hohen Löttemperatur liegt die weitere Komponente (sie wird auch als kristalliner Füllstoff bezeichnet) zunächst in fester Form vor, während die Glas-Komponente 10 flüssig ist.

Nach dem Löten wird das Glaslot 8 für wenigstens 60 Stunden einer Temperatur zwischen 600 und 800 °C ausgesetzt. Während dieser Zeitdauer kommt es zu einer Reaktion zwischen der Glas-Komponente 10 und der weiteren Komponente 12 (dem kristallinen Füllstoff). Die weitere Komponente 12 dient teilweise zur kristallinen Keimbildung in der Glas-Komponente 10. Es kommt zur Bildung von Kristallen in der Glas-Komponente 10 und somit zu einer teilweisen Entglasung der Glas-Komponente 10. Zu einem anderen Teil werden die Körner der weiteren Komponente 12 geschmolzen, wodurch die Viskosität der Glaskomponente 10 erhöht wird.

Oberhalb einer Temperatur von 600 °C bildet sich somit teilweise eine kristalline Struktur im Glaslot 8. Zugleich bleibt aber im Glaslot 8 eine viskose Restglaskomponente erhalten. D.h. daß im Glaslot 8 zugleich eine glasartige und eine kristalline Phase nebeneinander existieren.

Bei den Bauelementen 2,4 kann es sich beispielsweise um die Bauelemente einer Hochtemperatur-Brennstoffzelle handeln (gemeint sind hier diejenigen Bauelemente einer Hochtemperatur-Brennstoffzelle, die durch die Fuge 6 mit einer kleinen Dicke gasdicht und elektrisch gegeneinander isoliert sein müssen). Bei einem Stapel aus Hochtemperatur-Brennstoffzellen (der sich in der Regel aus wenigstens 50 Zellen zusammensetzt) tritt beim Lötvorgang (einschließlich der auf den Lötvorgang folgenden aber zum Fügeprozeß dazugehörigen Reduktionsphase) ein mechanisches Absetzverhalten auf. Dieses Absetzverhalten ist konstruktionsbedingt (unter anderem bedingt durch die Masse des Stapels) und führt zu Änderungen der Längenausdehnung des Stapels und damit zugleich auch zu Änderungen der Dicken der eingesetzten Fugen 6 aus dem Glaslot 8.

Da das Glaslot 8 einen viskosen Anteil (nämlich einen Anteil der Glas-Komponente 10) aufweist, ist die Fuge 6 aus dem Glaslot 8 in der Lage, diese Längenänderungen in Richtung der Pfeile 14 auszugleichen. Wäre dieser viskose Anteil nicht vorhanden (die Glaslote aus dem Stand der Technik besitzen keine ausreichend kleine Viskosität, um in Fugen mit einer Dicke von höchstens 200 µm eingesetzt werden zu können), käme es zu Beschädigung der Zellen und somit zu einer Funktionsbebeschränkung des gesamten Stapels..

Aufgrund der kristallinen Struktur in der weiteren Komponente 12 und teilweise auch in der Glas-Komponente 10, weist das Glaslot 8 einen linearen thermischen Ausdehnungskoeffizienten auf, der für den Einsatz in der Hochtemperatur-Brennstoffzelle geeignet ist. Die Hochtemperatur-Brennstoffzelle wird in der Regel bei Temperaturen zwischen 600 und 800 °C betrieben. Temperaturschwankungen und damit verbundene Volumenänderungen in den Komponenten 2,4 der Hochtemperatur-Brennstoffzelle können somit durch das Glaslot 8 ausgeglichen werden. Rißbildungen in der Fuge 6 werden weitgehend vermieden.

Das Glaslot 8 ist gasundurchlässig, korrosionsbeständig und weitgehend elektrisch isolierend. Diese Eigenschaften begünstigen den Einsatz des Glaslotes 8 in der Hochtemperatur-Brennstoffzelle. Die zu fügenden Bauelemente 2,4 der Hochtemperatur-Brennstoffzelle (aber auch bei Bauelementen, die nicht in einer Hochtemperatur-Brennstoffzelle verwendet werden) werden nur an Teilbereichen ihrer Oberfläche gefügt (d.h. miteinander verbunden). An den Teilbereichen, wo eine elektrische Leitfähigkeit gewährleistet sein muß, wird kein Glaslot 8 aufgetragen. Zum Herstellen solcher Fugen 6 eignet sich besonders gut die Siebdrucktechnik. Dabei wird eine Schablone angefertigt, die den geometrischen Oberflächenbeschaffenheiten der zu fügenden Bauelemente 2,4 entspricht (wo eine elektrische Leitfähigkeit gegeben sein muß, deckt die Schablone die Oberfläche der Bauelemente 2,4 ab, so daß während des Verfahrens zum Erzeugen der Fuge 6 kein Glaslot 8 an diesen Teilbereichen aufgetragen wird).

Da Fugen mit einer kleinen Dicke nach der Erfindung insbesondere auch in der Elektronik eingesetzt werden (wo die Abstände zwischen den einzelnen Bauelementen bzw. Komponenten vorrangig immer weiter reduziert werden), bestehen für das Glaslot große Einsatzmöglichkeiten.

## Patentansprüche

1. Composit-Glaslot (8) mit 70 bis 95 Gew.-% einer Glas-Komponente (10), die 35 bis 60 Gew.-%, SiO₂, 8 bis 15 Gew.-% Al₂O₃, 15 bis 30 Gew.-% BaO, 10 bis 20 Gew.-% B₂O₃ und bis zu 15 Gew.-% MgO enthält, und mit 5 bis 30 Gew.-% einer ein Metalloxid enthaltenden weiteren Komponente (12) zum Fügen von metallischen und/oder keramischen Bauelementen (2,4), wobei die weitere Komponente (12) Körner mit einer Korngröße bis zu 10 µm aufweist.

2. Glaslot (8) nach Anspruch 1, **dadurch gekennzeichnet**, daß die weitere Komponente (12) Körner mit einer Korngröße unter 5 µm aufweist.

3. Glaslot (8) nach Anspruch 1 oder 2, **dadurch gekennzeichnet**, daß die weitere Komponente (12) Magnesiumoxid (MgO) als Metalloxid enthält.

4. Glaslot (8) nach einem der vorhergehenden Ansprüche, **dadurch gekennzeichnet**, daß die Glas-Komponente (10) Körner mit einer Korngröße bis zu 10 µm, insbesondere unter 5 µm, aufweist.

5. Glaslot (8) nach einem der vorhergehenden Ansprüche, **gekennzeichnet durch** eine Löttemperatur über 600 °C.

6. Glaslot (8) nach einem der vorhergehenden Ansprüche, **dadurch gekennzeichnet**, daß die Löttemperatur kleiner 1100 °C beträgt.

7. Verwendung des Glaslotes (8) nach einem der Ansprüche 1 bis 6 zum Fügen zweier Bauelemente (2,4) , wobei beide Bauelemente (2,4) aus Metall oder Keramik sind oder ein Bauelement (2,4) aus Metall und das andere Bauelement (2,4) aus Keramik ist.

8. Verwendung nach Anspruch 7, **dadurch gekennzeichnet**, daß die Bauelemente (2,4) einen Abstand zwischen 50 und 200 µm voneinander haben, der mit dem Glaslot (8) gefüllt wird.

9. Verwendung nach Anspruch 8 oder 9, wobei die beiden Bauelemente (2,4) nur an Teilbereichen ihrer Oberfläche zusammengefügt sind und das Glaslot mittels Siebdrucktechnik nur an diesen Teilbereichen aufgebracht wird.

10. Hochtemperatur-Brennstoffzelle mittels einer Verwendung nach einem der Ansprüche 7 bis 9.
